# DEMANDE DE BREVET EUROPEEN

(11) **EP 3 392 728 A1**
(43) Date de publication de la demande: **24.10.2018**
(21) Numéro de dépôt: 18167648.7
(22) Date de dépôt: 17.04.2018
(51) Int. Cl.: G05D 1/00

(54) **PROCÉDÉ DE PILOTAGE D'UN DRONE À VOILURE TOURNANTE, PROGRAMME D'ORDINATEUR, APPAREIL ÉLECTRONIQUE ET DRONE ASSOCIÉS**

(30) Priorité: 19.04.2017 FR 1753380
(71) Demandeur: Parrot Drones, 75010 Paris (FR)
(72) Inventeur: LINE, Martin, 75015 PARIS (FR); LEURENT, Edouard, 75005 PARIS (FR)
(74) Mandataire: Lavoix

(57) **Abrégé**

L'invention concerne un procédé de pilotage d'un drone (14) à voilure tournante, le procédé étant mis en oeuvre par un appareil électronique de pilotage du drone (14), le drone (14) étant configuré pour embarquer une caméra (18),

Le procédé comprend le calcul (160) de différents types de consigne(s) de navigation du drone, en fonction de différents types d'instructions de pilotage (I_{P}) du déplacement du drone, un type d'instruction de pilotage (I_{P}) étant propre à modifier au moins un angle d'attitude du drone et/ou la vitesse de déplacement du drone, chaque type d'instructions de pilotage étant respectivement associé à un type de consignes de navigation,
le calcul comprenant, pour au moins un type d'instructions de pilotage :
- la détermination (162) de l'axe de visée (V) de la caméra (18),
- l'obtention (166) d'au moins une consigne de navigation associée audit au moins un type d'instructions de pilotage (I_{P}) en fonction de l'axe de visée (V) de la caméra (18).

## Description

La présente invention concerne un procédé de pilotage d'un drone à voilure tournante, le procédé étant mis en oeuvre par un appareil électronique de pilotage du drone, le drone étant configuré pour embarquer une caméra.

L'invention concerne également un programme d'ordinateur comportant des instructions logicielles qui, lorsqu'elles sont exécutées par un ordinateur, mettent en oeuvre un tel procédé de pilotage d'un drone à voilure tournante.

L'invention concerne également un appareil électronique de pilotage d'un drone à voilure tournante.

L'invention concerne également un drone à voilure tournante configuré pour embarquer une caméra, comprenant au moins un appareil électronique de pilotage du type précité.

L'invention concerne le domaine des drones, c'est-à-dire des appareils motorisés volants pilotés à distance. L'invention s'applique notamment aux drones à voilure tournante propre à se déplacer dans l'air au moyen d'au moins un rotor actionné par au moins un moteur. Il existe des drones à voilure tournante (i.e. mono-rotor), tels que les hélicoptères, ou des drones à plusieurs voilures tournantes (i.e. multi-rotors) tels que les quadricoptères (également appelés quadripodes) ou d'autres drones sur-actionnés tel que des hexacoptères ou optocoptères, etc.

Les drones à voilure tournante, par exemple, de type quadricoptère, sont propres à tenir un point fixe et évoluer aussi lentement que souhaité, ce qui les rend beaucoup plus faciles à piloter même par des utilisateurs inexpérimentés.

Classiquement, pour un drone à voilure tournante muni d'une caméra, la caméra comprenant un capteur d'image(s), le pilotage du drone (i.e. le contrôle de l'ensemble des déplacements du drone en cours de vol) est simplement indépendant de la prise de vue mise en oeuvre par la caméra embarquée à bord du drone.

Du fait que la prise de vue n'a actuellement aucune influence sur le contrôle des déplacements du drone, il n'est pas toujours aisé, pour un utilisateur, de mettre en oeuvre un pilotage adapté pour optimiser la prise de vue souhaitée.

Un des buts de l'invention est alors de proposer un procédé de pilotage d'un drone à voilure tournante configuré pour embarquer une caméra, permettant de faciliter le pilotage de l'utilisateur pour obtenir une prise d'image optimale.

A cet effet, l'invention a pour objet un procédé de pilotage d'un drone à voilure tournante, le procédé étant mis en oeuvre par un appareil électronique de pilotage du drone, le drone étant configuré pour embarquer une caméra,
le procédé comprenant le calcul de différents types de consigne(s) de navigation du drone, en fonction de différents types d'instructions de pilotage du déplacement du drone, un type d'instruction de pilotage étant propre à modifier au moins un angle d'attitude du drone et/ou la vitesse de déplacement du drone, chaque type d'instructions de pilotage étant respectivement associé à un type de consignes de navigation,
le calcul comprenant, pour au moins un type d'instructions de pilotage :
- la détermination de l'axe de visée de la caméra,
- l'obtention d'au moins une consigne de navigation associée audit au moins un type d'instructions de pilotage en fonction de l'axe de visée de la caméra.

Le procédé de pilotage d'un drone à voilure tournante selon l'invention prenant automatiquement en compte l'axe de visée de la caméra pour calculer les consigne(s) de navigation transmises au(x) moteur(s) du drone à voilure tournante permet alors d'optimiser en temps réel le pilotage afin d'éviter la perte de vue de la cible pour laquelle l'utilisateur souhaite la prise d'une ou plusieurs images.

En d'autres termes, par rapport à l'état de la technique, une modification du calcul de consigne est mise en oeuvre pour permettre simultanément au déplacement du drone une capture d'image optimale d'une cible sélectionnée par l'utilisateur au moyen d'instructions d'orientation de la caméra.

Ainsi, le procédé selon l'invention correspond à un asservissement du déplacement du drone en fonction de l'axe de visée de la caméra sur lequel est centrée la zone de capture d'image.

Par la suite, on entend par « procédé de pilotage » le procédé automatique selon l'invention permettant de transformer les instructions de pilotage (i.e. comprises dans les commandes utilisateur) saisies par l'utilisateur, en commandes moteur. En d'autres termes, le procédé de pilotage mis en oeuvre automatiquement selon l'invention permet d'assister en temps réel le pilotage manuel de l'utilisateur.

Suivant d'autres aspects avantageux de l'invention, le procédé d'optimisation de l'inclinaison de vol d'un drone comporte l'une ou plusieurs des caractéristiques suivantes, prises isolément ou suivant toutes les combinaisons techniquement possibles :
- la détermination de l'axe de visée de la caméra comprend le traitement d'une instruction d'orientation de la caméra, reçue par l'appareil électronique de pilotage du drone, et/ou préalablement stockée en mémoire de l'appareil électronique de pilotage du drone ;
- l'obtention de ladite au moins une consigne de navigation en fonction de l'axe de visée met en oeuvre, automatiquement, au moyen de l'appareil électronique de pilotage du drone, un changement de repère,
   le changement de repère étant basé sur l'obtention d'un repère courant triaxial de calcul de consigne(s) de navigation par rotation d'un repère précédent triaxial de calcul de consigne de navigation autour d'un axe invariant dudit repère précédent, transformant un des deux autres axes du repère précédent en l'axe de visée de la caméra ;
- le procédé comprend la détection d'un changement d'axe de visée de la caméra et la réitération du calcul d'au moins une consigne(s) de navigation du drone à chaque changement d'axe de visée détecté ;
- le procédé est activable par saisie d'une première commande utilisateur prédéterminée ;
- le procédé comprend un contrôle de vitesse du drone modifié par application d'une vitesse minimale de déplacement prédéterminée associée à chaque type d'instruction de pilotage, ladite application étant activable par saisie d'une deuxième commande utilisateur prédéterminée ;
- lorsqu'en présence de ladite deuxième commande utilisateur prédéterminée et lorsque le type d'instruction de pilotage est propre à modifier l'angle de roulis du drone selon un angle de roulis souhaité, le type de consigne(s) de navigation associée(s) reste indépendant de l'axe de visée de la caméra,
   le procédé comprend alors la détermination d'un angle de lacet associé à l'angle de roulis souhaité et d'une consigne de vitesse de rotation horizontale de la caméra.

L'invention a également pour objet un programme d'ordinateur comportant des instructions logicielles qui, lorsqu'elles sont exécutées par un ordinateur, mettent en oeuvre un procédé tel que défini ci-dessus.

L'invention a également pour objet un appareil électronique de pilotage d'un drone à voilure tournante configuré pour embarquer une caméra,
l'appareil électronique comprenant une unité de calcul de différents types de consigne(s) de navigation du drone, en fonction de différents types d'instructions de pilotage du déplacement du drone, un type d'instruction de pilotage étant propre à modifier au moins un angle d'attitude du drone et/ou la vitesse de déplacement du drone, chaque type d'instructions de pilotage étant respectivement associé à un type de consignes de navigation,
l'unité de calcul comprenant, pour au moins un type d'instructions de pilotage:
- un module de détermination de l'axe de visée de la caméra,
- un module d'obtention d'au moins une consigne de navigation associée audit au moins un type d'instructions de pilotage en fonction de l'axe de visée de la caméra.

L'invention a également pour objet un drone à voilure tournante configuré pour embarquer une caméra, le drone comprenant au moins un appareil électronique de pilotage.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue en perspective d'un système électronique de guidage d'un drone selon l'invention, comprenant un drone à voilure tournante propre à évoluer dans les airs sous le contrôle d'un équipement de télécommande distant ;
- la figure 2 est un schéma par blocs des différents organes de contrôle d'asservissement et d'assistance au pilotage d'un appareil électronique du drone selon l'invention ;
- la figure 3 est un organigramme d'un procédé de pilotage d'un drone selon l'invention ;
- la figure 4 est une représentation schématique du changement de repère, mis en oeuvre selon l'invention, en fonction de l'axe de visée de la caméra ;
- les figures 5 et 6 illustrent un exemple de répartition ergonomique de commandes mise à disposition de l'utilisateur sur sa télécommande selon deux variantes distinctes de réalisation.

Dans la suite de la description, l'expression « sensiblement égal à » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

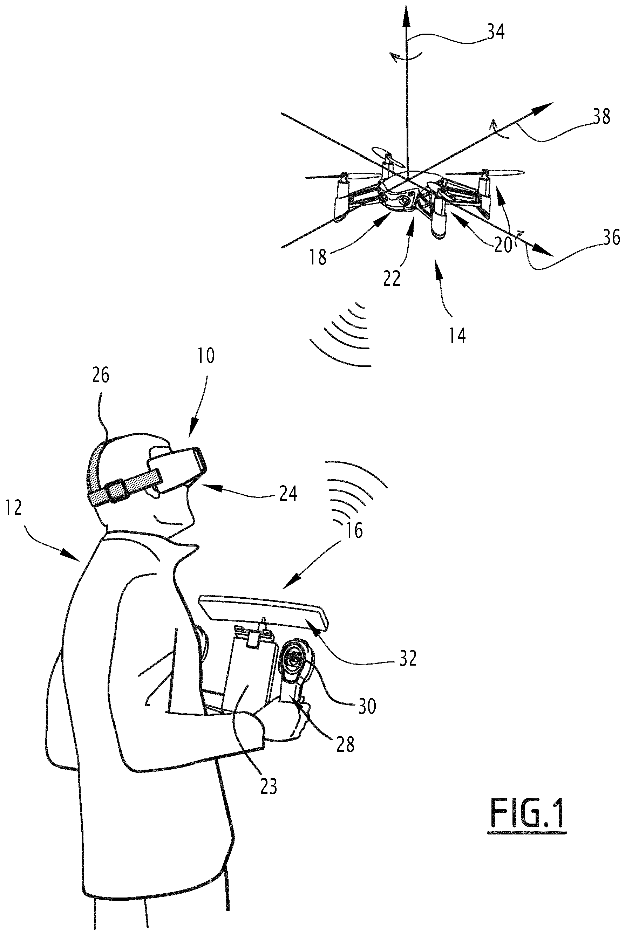

Sur la figure 1, un système électronique de guidage d'un drone permet, au moyen d'un système électronique de visualisation 10, à un utilisateur 12 d'optimiser le guidage d'un drone 14.

Le drone 14 est un engin volant motorisé pilotable à distance, notamment via une manette 16 de télécommande permettant à l'utilisateur 12 de saisir ses commandes de vol.

Le drone 14, c'est-à-dire un aéronef sans pilote à bord, comprend une caméra 18 comprenant un objectif associé à un capteur d'image, non représentés, configurés pour prendre une image d'une scène comportant une pluralité d'objets.

Par exemple, l'objectif est un objectif hémisphérique de type hypergone (de l'anglais *fisheye*), c'est-à-dire couvrant un champ visuel d'un grand angle de vue, de l'ordre de 180° ou plus. L'objectif est disposé devant le capteur d'image(s) de façon que le capteur d'image(s) capte les images à travers l'objectif.

Lorsque le capteur d'image(s) est associé à un objectif hypergone, il est possible pour l'utilisateur, par saisie d'instruction d'orientation de la caméra au moyen de la manette 16, d'orienter virtuellement l'axe de visée (i.e. l'axe de prise de vue) de la caméra.

En effet, un procédé de capture d'image(s) permet de définir un capteur d'image(s) virtuel par sélection d'une zone Zc de dimensions réduites par rapport aux dimensions réelles du capteur d'image(s), la zone Zc étant centrée sur l'axe de visée de la caméra.

L'obtention d'une image à partir d'une zone Zc de dimensions réduites du capteur d'image(s) permet d'orienter virtuellement l'axe de visée de la caméra dans la direction de la fenêtre du champ d'ensemble de la caméra correspondant à la zone Zc de dimensions réduites, sans modifier l'orientation physique de la caméra, qui reste immobile par rapport au drone à voilure tournante 14.

Selon une autre variante, non représentée, la caméra est montée mobile en rotation sur un support (de l'anglais *gimbal*) dédié du drone, de sorte que son axe de visée est modifiable mécaniquement et non virtuellement par traitement numérique tel que décrit ci-dessus.

Le drone 14, est par exemple un drone à voilure tournante comportant au moins un rotor 20 (ou hélice) actionné par au moins un moteur. Sur la figure 1, le drone 14 comporte une pluralité de rotors 20, et est alors appelé drone multirotor. Le nombre de rotors 20 est en particulier égal à quatre dans cet exemple, et le drone 14 est alors un drone quadrirotor ou quadricoptère.

Le drone 14 est également muni d'un module de transmission 22 pour transmettre, de préférence par ondes radioélectriques, à destination d'un équipement électronique, tel que le module de réception, non représenté, du système électronique de visualisation 10, le module de réception, non représenté, de la manette 16 ou encore le module de réception de la tablette 23 numérique multimédia à écran tactile montée sur la manette 16, non représenté, la ou les images acquises par le capteur d'images.

Selon l'exemple représenté sur la figure 1, un système électronique de visualisation 10 permet à l'utilisateur 12 de visualiser des images, notamment des images de la vidéo reçue de la part du drone à voilure tournante 14.

Le système électronique de visualisation 10 comprend un appareil électronique, par exemple, un ordiphone (de l'anglais *smartphone*), muni d'un écran d'affichage, et un casque 24 comportant un support de réception de l'appareil électronique, une surface d'appui contre le visage de l'utilisateur 12, en regard de ses yeux, et deux dispositifs optiques disposés entre le support de réception et la surface d'appui.

Le casque 24 comporte en outre une sangle de maintien 26 permettant de maintenir le casque 24 sur la tête de l'utilisateur 12.

L'appareil électronique est amovible par rapport au casque 24 ou intégré au casque 24.

Le système électronique de visualisation 10 est, par exemple, relié à la manette 16 via une liaison de données, non représentée, la liaison de données étant une liaison radioélectrique ou encore une liaison filaire.

Dans l'exemple de la figure 1, le système électronique de visualisation 10 comprend en outre un module de réception, non représenté, configuré pour recevoir au moins une image de la part du drone à voilure tournante 14, la transmission de l'image étant effectuée de préférence par ondes radioélectriques.

Le système de visualisation 10 est par exemple un système de visualisation en réalité virtuelle, c'est-à-dire un système permettant à l'utilisateur 12 de visualiser une image dans son champ visuel, avec un angle de champ de vision, également appelé FOV (de l'anglais *Field Of Vision*, ou *Field Of View*), ayant une valeur importante, typiquement supérieure à 90°, de préférence supérieure ou égale à 100°, afin de procurer une vision immersive (également appelée « vision FPV » de l'anglais *First Person View)* pour l'utilisateur 12.

Un tel système de visualisation 10 est optionnel et permet notamment d'augmenter « l'expérience utilisateur » en configuration de pilotage immersif, un pilotage sans utiliser ce système de visualisation est également possible.

La manette 16 est connue en soi, et permet par exemple de piloter le drone à voilure tournante 14. La manette 16 comprend deux poignées de préhension 28, chacune étant destinée à être saisie par une main respective de l'utilisateur 12, une pluralité d'organes de commande, comprenant ici deux manches à balai 30 (de l'anglais *joystick),* chacun étant disposé à proximité d'une poignée de préhension 28 respective et étant destiné à être actionné par l'utilisateur 12, de préférence par un pouce respectif.

La manette 16 comprend également une antenne radioélectrique 32 et un émetteur-récepteur radioélectrique, non représenté, pour l'échange de données par ondes radioélectriques avec le drone à voilure tournante 14, à la fois en liaison montante et en liaison descendante.

En complément, ou à titre d'alternative au regard du système de visualisation 10, la tablette 23 numérique multimédia à écran tactile est montée sur la manette 16 pour assister l'utilisateur 12 lors du pilotage du drone à voilure tournante 14.

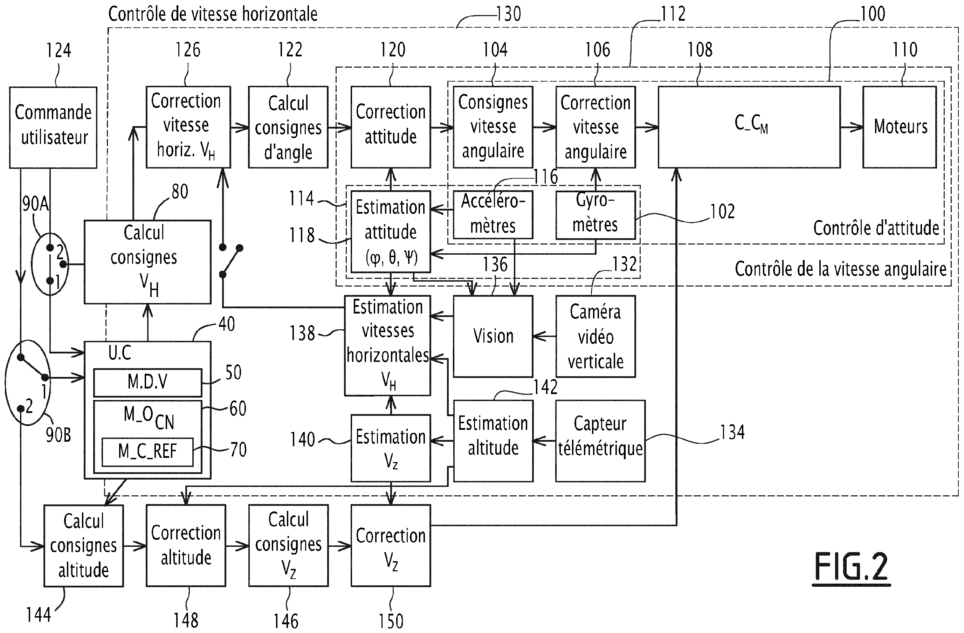

La manette 16 est configurée pour transmettre les commandes 124 de l'utilisateur à un appareil électronique de pilotage automatique (i.e. d'assistance automatique au pilotage manuel de l'utilisateur) intégré au drone à voilure tournante, dont un exemple de schéma par blocs fonctionnels est représenté sur la figure 2.

Le système électronique de guidage du drone décrit ci-dessus, et comprenant optionnellement un système de visualisation 10 en réalité virtuelle, est donné à titre d'exemple, l'invention pouvant être mis en oeuvre avec d'autres types de systèmes de guidage de drone, et le cas échéant sans système de visualisation 10.

Le pilotage du drone 14 consiste à faire évoluer celui-ci par :
rotation autour d'un axe de lacet 34 (de l'anglais *yaw),* pour faire pivoter vers la droite ou vers la gauche l'axe principal du drone
rotation autour d'un axe de tangage 36 (de l'anglais *pitch*), pour le faire avancer ou reculer
rotation autour d'un axe de roulis 38 (de l'anglais *roll*), pour le décaler vers la droite ou vers la gauche ; et
translation vers le bas ou vers le haut par changement du régime des gaz, de manière à respectivement réduire ou augmenter l'altitude du drone.

La figure 2 est un schéma par blocs des différents organes de contrôle d'asservissement et de pilotage du drone 14, ainsi que de correction des déplacements de l'image selon la technique de l'invention.

On notera que, bien que ces schémas soient présentés sous forme de circuits interconnectés, la mise en oeuvre des différentes fonctions est selon un mode de réalisation essentiellement logicielle, cette représentation n'ayant qu'un caractère illustratif.

Selon un autre mode de réalisation, l'invention est propre à être mise en oeuvre au moyen d'un ou de plusieurs circuit(s) logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*) montés sur une carte électronique embarquée sur le drone à voilure tournante 14.

De façon générale, comme illustré en figure 2, le système de pilotage implique plusieurs boucles imbriquées pour le contrôle de la vitesse horizontale, de la vitesse angulaire de l'attitude du drone 14 et des variations d'altitude, automatiquement ou sous commande de l'utilisateur.

Selon la présente invention, l'appareil électronique de pilotage automatique (i.e. d'assistance automatique au pilotage manuel de l'utilisateur) permet, par exemple, à l'utilisateur de bénéficier d'au moins deux modes de pilotage.

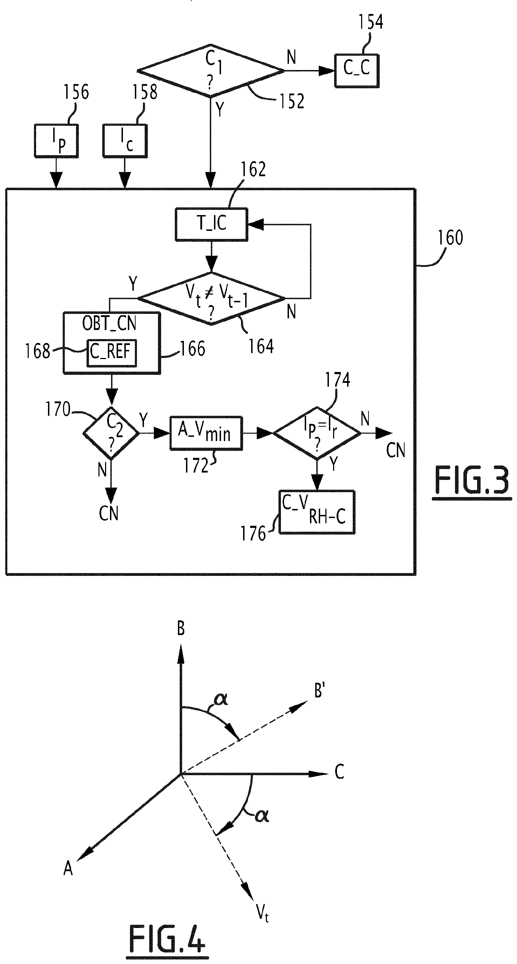

Un tel appareil électronique comprend ou est propre à être connecté à une unité de traitement d'information, non représentée, formée par exemple d'une mémoire et d'un processeur associé à la mémoire, le processeur étant apte à exécuter un programme d'ordinateur comportant des instructions logicielles qui, lorsqu'elles sont exécutées mettent en oeuvre un procédé de pilotage selon l'invention tel que décrit par la suite en relation avec les figures 3 et 4.

Le premier mode 1, ou « mode caméra » d'assistance automatique au déplacement du drone 14, proposé selon l'invention propose à l'utilisateur d'établir une corrélation (i.e. une dépendance ou asservissement) entre le déplacement du drone et la prise de vue de la caméra. Un tel premier mode a pour but d'améliorer la qualité de prise de vue en assistant automatiquement l'utilisateur pour piloter le drone de sorte que l'axe de visée de la caméra soit pris en compte en temps réel.

Pour ce faire, l'appareil électronique de pilotage automatique selon l'invention comprend une unité U_C de calcul 40 de différents types de consigne(s) de navigation CN du drone, en fonction de différents types d'instructions de pilotage I_{P} du déplacement du drone indiquées au sein des commandes utilisateur 124.

Un type d'instruction de pilotage I_{P} est propre à modifier au moins un angle d'attitude (i.e. l'angle de tangage *θ*, et/ou l'angle de roulis *ϕ*, et/ou l'angle de lacet *ψ*) du drone 14 et/ou la vitesse de déplacement du drone 14 (i.e. accélération ou décélération), et est respectivement associé à un type de consignes de navigation CN.

Par exemple, un premier type d'instruction de pilotage I_{P1} vise uniquement à modifier l'angle de tangage *θ* du drone, un deuxième type d'instruction de pilotage I_{P2} vise uniquement à modifier l'angle de roulis *ϕ* du drone, un troisième type d'instruction de pilotage I_{P3} vise uniquement à modifier l'angle de lacet *ψ* du drone, un quatrième type d'instruction de pilotage I_{P4} vise à modifier à la fois l'angle de roulis *ϕ* et l'angle de tangage *θ* du drone, un cinquième type d'instruction de pilotage I_{P5} vise à modifier l'angle de lacet *ψ* du drone et sa vitesse de déplacement, etc.

L'unité de calcul 40 comprend, pour au moins un type d'instructions de pilotage I_{P} :
- un module M.D.V de détermination 50 de l'axe de visée V de la caméra 18,
- un module M_O_{CN} d'obtention 60 d'au moins une consigne de navigation CN associée audit au moins un type d'instructions de pilotage I_{P} en fonction de l'axe de visée de la caméra 18.

En particulier, le module M_O_{CN} d'obtention 60 d'au moins une consigne de navigation CN comprend un module 70 de changement de repère M_C_REF, le changement de repère (i.e. référentiel) étant basé sur l'obtention d'un repère courant triaxial de calcul de consigne(s) de navigation par rotation d'un repère précédent triaxial de calcul de consigne de navigation autour d'un axe invariant dudit repère précédent, transformant un des deux autres axes du repère précédent en l'axe de visée de la caméra tel qu'illustré par la suite par la figure 4.

Ainsi, l'unité de calcul 40 est, selon le « mode caméra » proposé selon la présente invention, propre à délivrer en sortie des consignes de navigation CN exprimées dans un référentiel triaxial dont un des axes correspond à l'axe de visée V de la caméra et à les transmettre à la fois en entrée d'un circuit de calcul de consignes d'altitude 144 et en entrée d'un circuit de calcul de consignes de vitesse horizontale V_{H} 80.

Autrement dit par consigne de navigation CN, on entend des données permettant de calculer une consigne d'altitude et/ou une cosigne de vitesse horizontale.

Pendant l'activation de ce mode 1 de pilotage en « mode caméra » tout changement d'axe de visée associé à un changement d'instruction d'inclinaison ou d'orientation de la caméra I_{C} reçue au sein des commandes utilisateur 124 est propre à modifier en temps réel le référentiel dans lequel les consignes de navigation sont exprimées.

Un tel mode 1, dit « mode caméra » est activable, au moyen de deux commutateurs 90A et 90B, enclenchés, de manière synchrone, sur ce mode 1, par saisie d'une première commande C₁ prédéterminée saisie par l'utilisateur au moyen d'un des joystick 30, d'un bouton, par exemple un bouton poussoir ou encore tactile, dédié non représenté ou de tout autre moyen techniquement possible permettant à l'utilisateur d'activer le mode 1 tel qu'une commande vocale.

Selon une autre variante, ce « mode caméra » est automatiquement activé lorsque l'utilisateur déclenche la période de capture par la caméra 18. En d'autres termes, selon cette variante, le déclenchement de la prise de vue (photo ou vidéo) par la caméra 18 vaut commande C1 d'activation du « mode caméra » de pilotage proposé selon l'invention.

Le deuxième mode 2, ou « mode de pilotage classique », conserve une indépendance totale des déplacements du drone par rapport à l'axe de visée de la caméra.

Ce mode 2 de pilotage classique est par exemple activé par défaut, les deux commutateurs 90A et 90B, étant alors enclenchés, de manière synchrone, sur ce mode 2 ou par application d'une autre commande, non représentée, et prédéterminée saisie par l'utilisateur ou d'une commande « inverse » de la première commande C₁ (e.g. nouvelle pression sur un bouton poussoir provoquant sa remontée).

Selon ce mode 2 de pilotage classique, le référentiel à utiliser pour déterminer les consignes d'altitude ou de vitesse horizontale reste contant pendant toute la durée d'activation de ce deuxième mode 2 et correspond par exemple à un référentiel de référence, tel qu'un repère triaxial horizontal (i.e. dont un plan défini par deux axes par exemple un axe y, et un axe x correspond au plan de l'horizon de vol du drone 14, un tel repère triaxial horizontal étant propre à tourner avec le drone).

Selon un aspect particulier de l'invention, non représenté, même en présence de la première commande C₁, le mode 1 de pilotage en mode caméra n'est pas nécessairement activé pour tous les types d'instructions de pilotage I_{P}. A titre d'exemple, un tel mode 1 de pilotage en mode caméra n'est activé que pour les instructions de pilotage de type I_{P1} et I_{P3} précédemment détaillées et le mode 2 de pilotage classique, (i.e. où le calcul classique de consignes de navigation reste indépendant de la caméra) est conservé pour les instructions de pilotage de type I_{P2}, I_{P4} et I_{P5.}

De manière plus générale décrite en relation avec l'activation du mode 2 de pilotage classique, l'appareil électronique de la figure 2, comprend également la boucle 100 de contrôle de la vitesse angulaire, correspondant à la boucle la plus centrale, qui utilise d'une part les signaux fournis par des gyromètres 102 et d'autre part une référence constituée par des consignes de vitesse angulaire 104. Ces informations sont appliquées en entrée d'un étage 106 de correction de la vitesse angulaire, qui pilote lui-même un étage C_C_{M} (i.e. appareil électronique) 108 de contrôle des moteurs 110 afin de commander séparément le régime des différents moteurs pour corriger la vitesse angulaire du drone 14 par l'action combinée des rotors entrainés par ces moteurs.

La boucle 100 de contrôle de la vitesse angulaire est imbriquée dans une boucle 112 de contrôle d'attitude, qui opère à partir des indications fournies par une centrale inertielle 114 comprenant les gyromètres 102, des accéléromètres 116 et un étage 118 qui produit une estimation de l'attitude réelle du drone 14. Les données issues de ces capteurs sont appliquées à l'étage 118 qui produit une estimation de l'attitude réelle du drone 14, appliquée à un étage 120 de correction d'attitude. Cet étage 120 compare l'attitude réelle du drone 14 à des consignes d'angle générées par un circuit 122 à partir de commandes directement appliquées par l'utilisateur 124 et/ou à partir de données générées en interne par le pilote automatique du drone 14 via le circuit 126 de correction de vitesse horizontale V_{H} (ou vitesse de déplacement horizontal du drone 14). Les consignes éventuellement corrigées appliquées au circuit 120 et comparées à l'attitude réelle du drone 14 sont transmises par le circuit 120 au circuit 104 pour commander les moteurs de manière appropriée.

Enfin, une boucle de contrôle de vitesse horizontale 130 comporte une caméra vidéo verticale 132 et un capteur télémétrique 134 faisant fonction d'altimètre. Un circuit 136 assure le traitement des images produites par la caméra verticale 132, en combinaison avec les signaux de l'accéléromètre 114 et du circuit d'estimation d'attitude 118, pour produire des données permettant d'obtenir une estimation des vitesses horizontales selon les deux axes de tangage et de roulis du drone 14, au moyen ou non d'un circuit 138 (i.e. le circuit 138 permet en boucle fermée (i.e. interrupteur fermé) un asservissement en vitesse qui est optionnellement mis en oeuvre).

Selon un aspect optionnel non représenté, un tel circuit 138 utilise par exemple des données fournies par un système de géolocalisation GPS ou Galliléo pour estimer la ou les vitesses horizontales V_{H}. Les vitesses horizontales estimées sont corrigées par l'estimation de vitesse verticale donnée par un circuit 140 et par une estimation de la valeur de l'altitude, donnée par le circuit 142 à partir des informations du capteur télémétrique 134.

Pour le contrôle des déplacements verticaux du drone 14 en mode de pilotage classique, l'utilisateur applique des commandes 124 à un circuit de calcul de consignes d'altitude 144, consignes qui sont appliquées à un circuit de calcul de consignes de vitesse ascensionnelle V_{z} 146 via le circuit de correction d'altitude 148 recevant la valeur d'altitude estimée donnée par le circuit 142. La vitesse ascensionnelle V_{z} calculée est appliquée à un circuit 150 qui compare cette vitesse de consigne à la vitesse correspondante estimée par le circuit 140 et modifie en conséquence les données de commande des moteurs (appareil électronique 108) en augmentant ou réduisant la vitesse de rotation simultanément sur tous les moteurs de façon à minimiser l'écart entre vitesse ascensionnelle de consigne et vitesse ascensionnelle mesurée.

Le fonctionnement de l'appareil électronique de pilotage automatique de la figure 2 va désormais être expliqué à l'aide des figures 3 et 4.

En particulier, la figure 3 représente un organigramme du procédé de pilotage d'un drone 14 à voilure tournante mis en oeuvre par l'appareil électronique de la figure 2 selon l'invention.

Lors d'une étape 152, durant le vol du drone 14, à un instant *t*, de réception de commandes 124 utilisateur, l'appareil électronique de la figure 2 détermine si les commandes utilisateur 124 comprennent ou non une première commande C₁ de déclenchement du mode 1 de pilotage en « mode caméra ».

Si les commandes utilisateur 124 sont dépourvues N de la première commande C₁ les commutateurs 90A et 90B basculent selon une étape 154 sur le mode 2 de pilotage, à savoir le mode de pilotage classique, (ou le cas échéant, « restent » sur le mode 2 de pilotage, si précédemment le mode de pilotage activé était déjà le mode 2).

Si, au contraire Y, les commandes utilisateur 124 comprennent la première commande C₁, les commutateurs 90A et 90B basculent, de manière synchrone, sur le mode 1 d'activation de l'unité U_C de calcul 40 spécifique à l'invention.

En d'autres termes, selon cette étape 152 du « mode caméra » de pilotage, les commandes utilisateur 124 correspondant respectivement à au moins une instruction I_{P} de pilotage 156 et/ou à au moins une instruction I_{C} d'inclinaison ou d'orientation 158 de la caméra 18 sont transmises en entrée de l'unité U_C de calcul 40.

Lors de l'étape 160, le calcul de consignes de navigation selon la présente invention est mis en oeuvre à chaque réception de commandes utilisateur 124 comprenant une instruction I_{P} de pilotage 156 et/ou une instruction I_{C} d'inclinaison ou d'orientation 158 de la caméra 18. Tout changement d'instruction I_{P} de pilotage 156 et/ou une instruction I_{C} d'inclinaison ou d'orientation 158 de la caméra 18 entraînera une réitération de l'étape de calcul 160.

Une telle étape de calcul 160 comprend, pour une instruction de pilotage I_{P} donnée, tout d'abord une étape 162 de détermination de l'axe de visée V de la caméra 18 par traitement de l'instruction I_{C} d'inclinaison ou d'orientation 158 de la caméra 18.

Une telle instruction I_{C} d'inclinaison ou d'orientation 158 de la caméra 18 est reçue par l'appareil électronique de pilotage du drone 14, et/ou préalablement stockée en mémoire de l'appareil électronique de pilotage du drone 14.

Par exemple, une telle instruction I_{C} d'inclinaison ou d'orientation 158 de la caméra 18 est stockée périodiquement en cours de vol du drone 14 au sein de sa mémoire, et correspond par exemple à une instruction I_{C} d'inclinaison ou d'orientation 158 de la caméra 18 reçue à un instant *t-1* préalable au basculement sur le mode 1 de pilotage en « mode caméra ».

De plus, selon un aspect particulier, une instruction I_{C} d'inclinaison ou d'orientation 158 de la caméra par défaut est par exemple stockée en permanence dans la mémoire de l'unité de traitement d'information embarquée à bord du drone 14, afin de pouvoir mettre en oeuvre le mode 1 de pilotage en « mode caméra » dès le démarrage du vol du drone 14 ou en l'absence d'instruction I_{C} d'inclinaison ou d'orientation 158 de la caméra 18 saisie manuellement par l'utilisateur au moyen de la manette 16.

L'instruction I_{C} d'inclinaison ou d'orientation 158 de la caméra 18, correspond, à une inclinaison *α* de la caméra vers le haut ou vers le bas (i.e. tangage caméra) par rapport au plan horizontal du drone contenant les axes de tangage 36 et de roulis 38 tel que représentés sur la figure 1, et/ou à une orientation, non représentée, de la caméra, restant dans le plan horizontal du drone 14, par exemple, de part et d'autre (i.e. à gauche ou à droite) de l'axe longitudinal du drone correspondant à l'axe de roulis 38 (i.e. cap caméra).

L'axe de visée Vₜ à l'instant t est l'axe optique de la caméra 18 (ou du capteur d'image(s) virtuel tel que décrit précédemment) dont l'inclinaison (et/ou l'orientation non représentée) est représentée par l'angle d'inclinaison *α* dans un référentiel de référence, tel qu'un repère triaxial horizontal (i.e. dont un plan comprenant deux axes par exemple un axe y, et un axe x correspond au plan de l'horizon de vol du drone 14, un tel repère triaxial horizontal étant propre à tourner avec le drone), utilisé selon le mode 2 de pilotage classique.

Puis, pour chaque réception à un instant t d'une instruction I_{C} d'inclinaison ou d'orientation de la caméra 18, une étape 164 de détection d'un changement d'axe de visée Vₜ à l'instant *t* par rapport à l'axe de visée Vₜ₋₁ à l'instant précédent *t-1* est mise en oeuvre.

Dans la négative N (i.e. pas de changement d'axe de visée), la consigne CN de navigation obtenue à l'instant *t-1* précédent pour la même instruction de pilotage I_{P} reste valable et est de ce fait maintenue.

Si au contraire Y, un changement d'axe de visée V est détecté, une étape 166 d'obtention d'une consigne de navigation CNₜ associée à l'instruction de pilotage I_{P} est mise en oeuvre en fonction de l'axe de visée Vₜ de la caméra.

En particulier, l'obtention 166 de la consigne de navigation CNₜ en fonction de l'axe de visée met en oeuvre, automatiquement, au moyen de l'appareil électronique de pilotage du drone 14, une étape 168 de changement de repère tel qu'illustré par la figure 4.

Un tel changement de repère (i.e. référentiel utilisée pour exprimer les consignes de navigation associée aux instructions de pilotage) est basé sur l'obtention d'un repère courant triaxial de calcul de consigne(s) de navigation comprenant les axes (B', Vₜ, A), par rotation d'un repère précédent (A, B, C) triaxial de calcul de consigne de navigation autour d'un axe invariant dudit repère précédent par exemple l'axe A tel que représenté sur la figure 4, transformant un des deux autres axes du repère précédent, par exemple l'axe C, en l'axe de visée Vₜ courant de la caméra.

Sur la figure 4, le repère précédent (A, B, C) correspond par exemple au référentiel de référence associé au mode 2 de pilotage classique, tel qu'un repère triaxial horizontal (i.e. dont un plan comprenant deux axes par exemple un axe y, et un axe x correspond au plan de l'horizon de vol du drone 14). Ce repère précédent après passage en mode 1 de pilotage selon le « mode caméra » est alors transformé par rotation selon un angle sensiblement égale à l'angle *α* autour de l'axe A, par exemple de tangage 36, en un repère courant (A, B', Vₜ).

Un tel mode 1 de pilotage en « mode caméra » permet notamment de transformer une instruction de pilotage I_{P}, qui selon le mode 2 de pilotage classique permettrait au drone 14 de s'élever indépendamment de l'axe de visée Vₜ de la caméra, en une consigne de navigation CN combinant à la fois une consigne d'altitude et une consigne de vitesse horizontale qui permet d'aller dans la direction visée par la caméra.

En d'autres termes, le mode 1 de pilotage en « mode caméra » permet d'un point de vue photographique ou cinématographique de zoomer et dézoomer, autrement dit d'aller vers ou de s'éloigner de la cible de la caméra, même si la caméra 18 est dépourvue de zoom optique et est immobile au sein du drone 14.

De plus, dès que l'axe de visée Vₜ de la caméra 18 est modifié par l'utilisateur, le procédé selon l'invention est propre à le détecter et à recalculer la consigne de navigation en l'exprimant dans un référentiel adapté dont un des axes correspond à l'axe de visée Vₜ de la caméra 18.

Ainsi, « l'expérience utilisateur » en configuration de pilotage immersif est améliorée une corrélation entre déplacement du drone et axe de visée Vₜ de la caméra étant appliquée.

Optionnellement, il est possible pour l'utilisateur selon l'invention, d'activer une option supplémentaire au moyen d'une deuxième commande C₂ propre à reproduire le comportement d'un drone à voilure fixe tout particulièrement de type « aile volante ».

Un drone à voilure fixe tout particulièrement de type "aile volante" est propre à évoluer à des vitesses élevées, typiquement jusqu'à 80 km/h, qui est, en comparaison avec un drone à voilure tournante, assez difficile à piloter compte tenu de sa très grande réactivité aux instructions de pilotage envoyées depuis la manette 16 de télécommande, et de la nécessité de conserver une vitesse de vol minimale, supérieure à la vitesse de décrochage.

L'option « aile volante » décrite ci-après vise à permettre à l'utilisateur d'avoir une expérience de pilotage d'aile volante avec un drone 14 à voilure tournante. Autrement dit, d'accéder au comportement en vol d'une aile volante tout en évitant un accroissement des difficultés de pilotage généralement associées à l'aile volante.

Ainsi, selon une étape 170, durant le vol du drone à voilure tournante 14, l'appareil électronique de la figure 2 détermine si les commandes utilisateur 124 comprennent ou non une deuxième commande C₂ de déclenchement de l'option « aile volante » au sein du mode 2 de pilotage appelé « mode caméra ».

En l'absence N de cette commande C₂ au sein des commandes utilisateur 124, aucune modification de la consigne CN délivrée par l'étape précédente 166 n'est opérée.

En présence Y de cette commande C₂ au sein des commandes utilisateur 124, une étape 172 de contrôle de vitesse du drone 14 modifié par application A_Vmin d'une vitesse minimale Vmin de déplacement prédéterminée associée à chaque type d'instruction de pilotage est mise en oeuvre.

En d'autres termes, cet aspect revient à l'application d'un décalage (de l'anglais *offset*) de la vitesse minimale de vol du drone 14, de sorte que la vitesse de vol soit, durant l'activation de cette option « aile volante », supérieure à la vitesse de décrochage, propre au comportement d'une aile volante.

Selon un aspect spécifique de ce mode 1 caméra avec option « aile volante », une étape 174 est mise en oeuvre pour vérifier si l'instruction de pilotage I_{P} en cours d'exécution vise à modifier ou non l'angle de roulis *ϕ* (de l'anglais *roll*) du drone à voilure tournante 14.

Dans la négative N, la consigne CN de navigation obtenue après application d'une vitesse minimale Vmin de déplacement prédéterminée reste valable et est de ce fait maintenue.

Dans l'affirmative Y, autrement dit en présence à la fois de la deuxième commande C₂, activant l'option aile volante, et d'un type d'instruction de pilotage I_{P} propre à modifier l'angle de roulis du drone 14 selon un angle de roulis souhaité par l'utilisateur, le type de consigne(s) de navigation CN associée(s) reste indépendant de l'axe de visée V de la caméra 18, et le procédé comprend alors une étape 176 de détermination C_V_{RH-C} d'un angle de lacet *ψ* associé à l'angle de roulis *ϕ* souhaité et d'une consigne de vitesse de rotation horizontale de la caméra 18.

L'application automatique d'un angle de lacet *ψ* associé à l'angle de roulis *ϕ* souhaité permet notamment de reproduire l'effet courbe de la trajectoire d'une aile volante en phase de virage.

Par ailleurs, selon cet aspect spécifique de l'option aile volante du mode caméra, la vitesse de rotation horizontale de la caméra 18 est appliquée de sorte que l'instruction de pilotage I_{P} visant à modifier l'angle de roulis du drone 14, induise automatiquement du point de vue de la capture d'image une modification de l'angle de lacet (de l'anglais *yaw).*

Une compensation en roulis de la stabilisation caméra 18 est ainsi obtenue et permet à la restitution d'image capturée par la caméra 18 d'avoir l'effet penché associée à la capture d'image qui serait obtenue à bord d'une aile volante.

En d'autres termes, cet aspect vise à « imiter » le comportement d'une aile volante qui lors d'un virage se déporte (i.e. l'axe de visée de la caméra « anticipe » la rotation du drone 14 due au virage et à son inertie, de sorte à restituer à l'utilisateur l'expérience visuelle qu'il pourrait percevoir au moyen d'une caméra embarquée à bord d'un drone à voilure fixe de type aile volante en phase de virage).

Ainsi, lorsque l'option aile volante est sélectionnée par l'utilisateur au moyen de la deuxième commande C₂, seuls les types d'instructions de pilotage propres à modifier l'angle de tangage, et/ou l'angle de lacet et/ou la vitesse de déplacement du drone 14 sont associées à des types de consignes de navigation obtenues en fonction de l'axe de visée de la caméra 18.

A titre d'alternative, non représentée, au mode de réalisation représenté sur la figure 3, l'enchainement des étapes précédemment décrites est modifié. Par exemple, après détermination 152 par l'appareil électronique de la figure 2 de la présence ou non de la première commande C₁ de déclenchement du mode 1 de pilotage en « mode caméra », l'étape 170 de détermination de la présence ou non deuxième commande C₂ de déclenchement de l'option « aile volante » est mise en oeuvre. Cette étape 170 est alors suivie des étapes 172 de contrôle de vitesse du drone 14 modifié par application A_Vmin d'une vitesse minimale Vmin de déplacement prédéterminée et 174 de vérification du type d'instruction de pilotage I_{P} en cours d'exécution vise à modifier ou non l'angle de roulis *ϕ* (de l'anglais *roll*) du drone à voilure tournante 14.

Dans la négative N, les étapes précédemment décrites 162 de détermination de l'axe de visée V de la caméra 18 à 166 d'obtention de la consigne de navigation CNₜ en fonction de l'axe de visée sont mises en oeuvre.

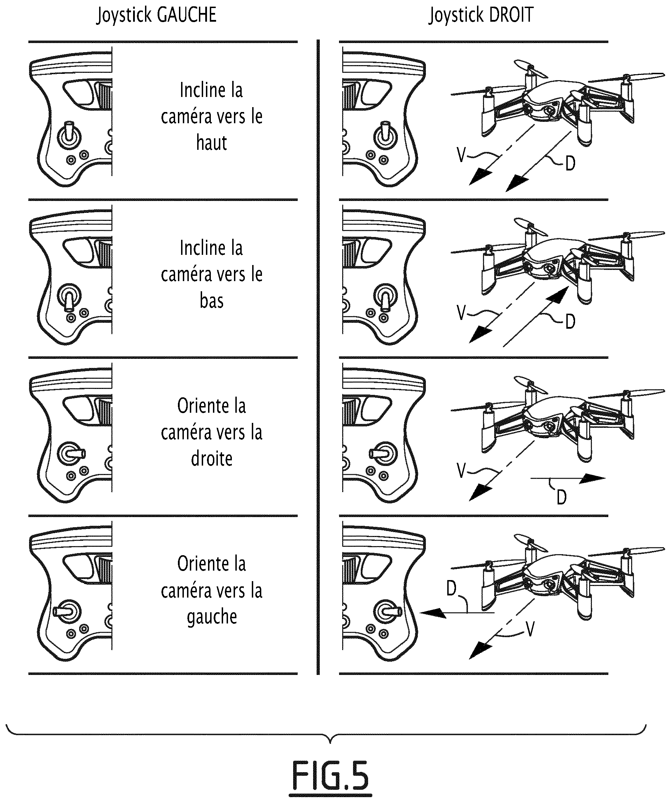

La figure 5 illustre un exemple de répartition ergonomique en mode 1 caméra selon l'invention des commandes à disposition de l'utilisateur sur la manette de télécommande 16 :
- avec le manche à balai (de l'anglais *joystick*) situé côté gauche (i.e. manipulé par la main gauche de l'utilisateur) l'utilisateur transmet au sein des commandes utilisateur 124 des instructions I_{C} d'inclinaison ou d'orientation de la caméra 18 du drone 14:
   - avec le manche actionné vers le haut ou vers le bas, l'utilisateur souhaite par exemple incliner la caméra respectivement vers le haut ou vers le bas ce qui correspond au sein du drone à un contrôle en vitesse angulaire, à savoir en vitesse de rotation verticale (de l'anglais *tilt*) de la caméra 18 pour obtenir une telle inclinaison souhaitée,
   - avec le manche actionné vers la gauche ou vers la droite, l'utilisateur souhaite par exemple orienter la caméra respectivement vers la gauche ou vers la droite ce qui correspond au sein du drone à un contrôle en vitesse angulaire, à savoir en vitesse de rotation horizontale (de l'anglais *yaw*) de la caméra 18 pour obtenir une telle orientation souhaitée,
- avec le manche à balai (de l'anglais *joystick*) situé côté droite (i.e. manipulé par la main droite de l'utilisateur) l'utilisateur transmet au sein des commandes utilisateur 124 des instructions I_{P} de pilotage du drone 14:
   - avec le manche actionné vers le haut ou vers le bas, l'utilisateur souhaite respectivement que le déplacement D du drone soit un rapprochement ou un éloignement selon l'axe de visée V de la caméra indiqué par le manche à balai gauche, autrement dit zoomer ou dézoomer grâce au seul déplacement D du drone, ce qui correspond au sein du drone à un contrôle en vitesse verticale V_{z} (gaz) et en vitesse horizontal V_{H} (angle de tangage (de l'anglais *pitch*)) avec un asservissement sur l'axe de visée V (i.e. un asservissement aux angles d'orientation, virtuel ou non, de la zone de capture de la caméra) tel que décrit précédemment,
   - avec le manche actionné vers la gauche ou vers la droite, l'utilisateur souhaite un déplacement D latéral respectivement sur la gauche ou sur la droite du drone ce qui correspond à un contrôle en attitude du drone selon l'angle de roulis (de l'anglais *roll*),

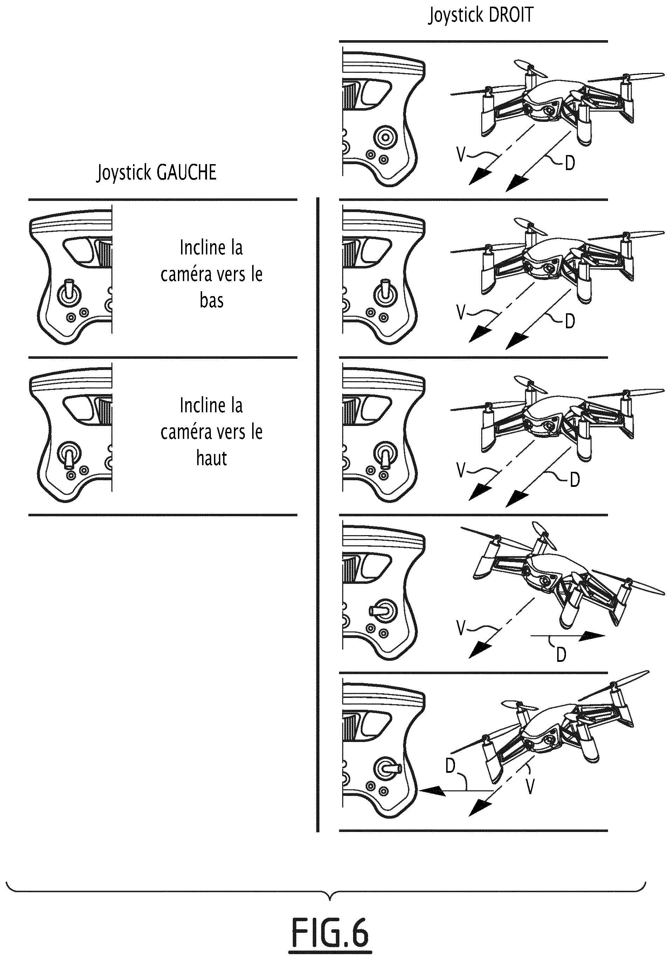

La figure 6 illustre un autre exemple de répartition ergonomique des commandes à disposition de l'utilisateur sur la manette de télécommande 16 en mode 1 caméra avec option aile volante telle que décrite précédemment selon l'invention:
- avec le manche à balai (de l'anglais *joystick*) situé côté gauche (i.e. manipulé par la main gauche de l'utilisateur) l'utilisateur transmet, en l'actionnant vers le haut ou vers le bas, au sein des commandes utilisateur 124 des instructions I_{C} de contrôle en position verticale de la caméra 18 du drone 14 (i.e. lorsque l'utilisateur relâche le joystick, l'axe de visée V de la caméra revient automatiquement pour viser l'horizon, ce qui induit automatiquement le retour à une position horizontale du drone 14). Autrement dit, lorsque l'option aile volante est activée, à la différence du mode caméra sans activation de cette option tel que précédemment décrit en relation avec la figure 5, le contrôle de la caméra est différent en agissant ici directement et précisément sur sa position et non sur le contrôle de sa vitesse angulaire.
- avec le manche à balai (de l'anglais *joystick*) situé côté droite (i.e. manipulé par la main droite de l'utilisateur) l'utilisateur transmet au sein des commandes utilisateur 124 des instructions I_{P} de pilotage du drone 14:
   - avec le manche au centre l'utilisateur souhaite que le déplacement D du drone soit un rapprochement avec une allure faible prédéterminée, par exemple 7m/s, de sorte à générer un zoom ralentit, ce qui correspond au sein drone à un contrôle en vitesse verticale V_{z} (gaz) et en vitesse horizontal V_{H} (angle de tangage (de l'anglais *pitch*)) avec un asservissement sur l'axe de visée V (i.e. un asservissement aux angles d'orientation, virtuel ou non, de la zone de capture de la caméra) tel que décrit précédemment,
   - avec le manche actionné vers le haut ou vers le bas, l'utilisateur souhaite respectivement que le déplacement D du drone soit un rapprochement avec une allure élevée prédéterminée, par exemple 12m/s et supérieure à celle associée au manche au centre, ou un ralentissement, par exemple de sorte à atteindre une vitesse de 2m/s du rapprochement en cours selon l'axe de visée V de la caméra indiqué par le manche à balai gauche, ce qui correspond au sein du drone à un contrôle en vitesse verticale (gaz) et en vitesse horizontal (angle de tangage (de l'anglais *pitch*)) avec un asservissement sur l'axe de visée tel que décrit précédemment,
   - avec le manche actionné vers la gauche ou vers la droite, l'utilisateur souhaite un déplacement D correspondant respectivement à un déport sur la gauche ou sur la droite du drone 14 ce qui correspond à un contrôle en attitude du drone selon l'angle de roulis (de l'anglais *roll*) et un angle de lacet (de l'anglais *yaw*) automatiquement associé de sorte à imiter l'effet courbe d'une aile volante en phase de virage, un tel déplacement D du drone étant associé spécifiquement selon ce mode aile volante à un contrôle en vitesse de la rotation horizontale de la caméra (i.e. le déport du drone 14 à gauche ou à droite induit automatiquement du point de vue de la capture d'image une modification de l'angle de lacet (de l'anglais *yaw*)).

Autrement dit, avec cette option aile volante, les commandes saisies selon l'axe vertical par l'utilisateur sur le joystick droit visent à gérer l'allure de déplacement D du drone 14 dont la valeur minimale Vmin est positive ou nulle, autorisant un ralentissement voire un arrêt si le joystick droit est actionné vers le bas (i.e. vers l'arrière) au maximum. En d'autres termes, par rapport aux commandes saisies selon l'axe vertical du mode caméra sans option aile volante ou encore du mode de pilotage classique, un changement d'échelle (de l'anglais *scaling*) et un décalage positif (de l'anglais *offset*) des instructions de vitesse de déplacement est mis en oeuvre.

La comparaison des figures 5 et 6 montre que pour une même commande utilisateur saisie sur la manette 16 par l'utilisateur, un déplacement D du drone différent sera mis en oeuvre en fonction du mode ou de l'option de pilotage activé(e).

Ainsi, l'utilisateur avec un même drone à voilure tournante 14 est propre à accéder à divers modes de pilotage pour chacun desquels il bénéficie d'une assistance automatique de pilotage grâce à l'appareil électronique de pilotage illustré par la figure 2, à savoir :
- un « mode de pilotage classique » où le déplacement du drone 14 à voilure tournante est décorrélé de la prise de vue,
- « un mode de pilotage caméra » où le déplacement du drone à voilure tournante 14 est ajusté automatiquement de sorte à optimiser la prise de vue, et
- au sein de ce mode caméra une option de pilotage aile volante qui vise à optimiser le déplacement du drone à voilure tournante 14 pour récréer visuellement le comportement d'une aile volante.

Au moyen d'un même drone 14 à voilure tournante l'expérience utilisateur est donc enrichie.

## Revendications

1. Procédé de pilotage d'un drone (14) à voilure tournante, le procédé étant mis en oeuvre par un appareil électronique de pilotage du drone (14), le drone (14) étant configuré pour embarquer une caméra (18),
le procédé comprenant le calcul (160) de différents types de consigne(s) de navigation du drone, en fonction de différents types d'instructions de pilotage (I_{P}) du déplacement du drone, un type d'instruction de pilotage (I_{P}) étant propre à modifier au moins un angle d'attitude du drone et/ou la vitesse de déplacement du drone, chaque type d'instructions de pilotage (I_{P}) étant respectivement associé à un type de consignes de navigation (CN), le calcul comprenant, pour au moins un type d'instructions de pilotage :
- la détermination (162) de l'axe de visée (V) de la caméra (18),
- l'obtention (166) d'au moins une consigne de navigation associée audit au moins un type d'instructions de pilotage (I_{P}) en fonction de l'axe de visée (V) de la caméra (18).

2. Procédé de pilotage selon la revendication 1, dans lequel la détermination (162) de l'axe de visée (V) de la caméra (18) comprend le traitement d'une instruction d'orientation de la caméra (18), reçue par l'appareil électronique de pilotage du drone (14), et/ou préalablement stockée en mémoire de l'appareil électronique de pilotage du drone (14).

3. Procédé de pilotage selon la revendication 1 ou 2, dans lequel l'obtention (166) de ladite au moins une consigne de navigation en fonction de l'axe de visée met en oeuvre, automatiquement, au moyen de l'appareil électronique de pilotage du drone, un changement de repère (168),
le changement de repère (168) étant basé sur l'obtention d'un repère courant triaxial de calcul de consigne(s) de navigation par rotation d'un repère précédent triaxial de calcul de consigne de navigation autour d'un axe invariant dudit repère précédent, transformant un des deux autres axes du repère précédent en l'axe de visée de la caméra.

4. Procédé de pilotage selon l'une quelconque des revendications précédentes, dans lequel le procédé comprend la détection (164) d'un changement d'axe de visée (V) de la caméra et la réitération de l'obtention d'au moins une consigne de navigation associée audit au moins un type d'instructions de pilotage à chaque changement d'axe de visée (V) détecté.

5. Procédé de pilotage selon l'une quelconque des revendications précédentes, dans lequel le procédé est activable par saisie d'une première commande (C₁) utilisateur prédéterminée.

6. Procédé de pilotage selon l'une quelconque des revendications précédentes, dans lequel le procédé comprend un contrôle de vitesse du drone modifié par application (172) d'une vitesse minimale de déplacement prédéterminée associée à chaque type d'instruction de pilotage (I_{P}), ladite application étant activable par saisie d'une deuxième commande (C₂) utilisateur prédéterminée.

7. Procédé de pilotage selon la revendication 6, dans lequel, lorsqu'en présence de ladite deuxième commande (C₂) utilisateur prédéterminée et lorsque le type d'instruction de pilotage (I_{P}) est propre à modifier l'angle de roulis du drone (14) selon un angle de roulis souhaité, le type de consigne(s) de navigation (CN) associée(s) reste indépendant de l'axe de visée (V) de la caméra (18),
le procédé comprenant alors la détermination (176) d'un angle de lacet associé à l'angle de roulis souhaité et d'une consigne de vitesse de rotation horizontale de la caméra (18).

8. Programme d'ordinateur comportant des instructions logicielles qui lorsqu'elles sont exécutée par un ordinateur, mettent en oeuvre un procédé selon l'une quelconque des revendications 1 à 7.

9. Appareil électronique de pilotage d'un drone (14) à voilure tournante configuré pour embarquer une caméra (18),
l'appareil électronique comprenant au moins une unité de calcul (40) de différents types de consigne(s) de navigation (CN) du drone (14), en fonction de différents types d'instructions (I_{P}) de pilotage du déplacement du drone, un type d'instruction de pilotage (I_{P}) étant propre à modifier au moins un angle d'attitude du drone (14) et/ou la vitesse de déplacement du drone (14), chaque type d'instructions de pilotage (I_{P}) étant respectivement associé à un type de consignes de navigation (CN),
l'unité de calcul (40) comprenant, pour au moins un type d'instructions de pilotage (I_{P}):
- un module (50) de détermination de l'axe de visée de la caméra,
- un module (60) d'obtention d'au moins une consigne de navigation associée audit au moins un type d'instructions de pilotage en fonction de l'axe de visée de la caméra.

10. Drone (14) à voilure tournante configuré pour embarquer une caméra (18), le drone comprenant au moins un appareil électronique de pilotage selon la revendication 9.
